# EUROPÄISCHE PATENTANMELDUNG

(11) **EP 2 546 046 A2**
(43) Veröffentlichungstag der Anmeldung: **16.01.2013**
(21) Anmeldenummer: 12167302.4
(22) Anmeldetag: 09.05.2012
(51) Int. Cl.: B29C 49/42, B65G 35/08, B67C 3/24

(54) **Transportmittel für Behälter und Verfahren zum Transport von Behältern**

(30) Priorität: 13.07.2011 DE 102011079076
(71) Anmelder: Krones AG, 93073 Neutraubling (DE)
(72) Erfinder: Seger, Martin, 92318 Neumarkt i.d.Opf. (DE); Hifinger, Toni, 93049 Regensburg (DE)
(74) Vertreter: Grünecker, Kinkeldey, Stockmair & Schwanhäusser

(57) **Zusammenfassung**

Beschrieben wird ein Transportmittel (1,21) für Behälter (2,32) mit: unabhängig voneinander angetriebenen Fahrzeugen (3), insbesondere Schlitten; einer Führungseinrichtung (5) zum umlaufenden Führen der Fahrzeuge (3); und Formschalen (4) zum Umschließen der Behälter (2,32) in einem umfänglichen Teilbereich ihrer Seitenwand. Hierbei sind die Formschalen (4) an den Fahrzeugen (3) gelagert, um die Behälter (2,32) zwischen den Formschalen (4) benachbarter Fahrzeuge (4) aufzunehmen und zu transportieren. Dadurch kann ein besonders kompaktes und flexibles Transportmittel (1,21) bereitgestellt werden, das sich auch für Behälter (2, 32) ohne Tragring eignet.

## Beschreibung

Die Erfindung betrifft ein Transportmittel für Behälter, ein Verfahren zum Transport von Behältern mit dem erfindungsgemäßen Transportmittel und einen für den Transport mit dem erfindungsgemäßen Transportmittel geeigneten Behälter.

Für den Transport von Behältern in Abfüllanlagen werden beispielsweise in den Bereichen von Einheiten zum Blasen der Behälter, zum Füllen der Behälter und/oder zum Verschließen der Behälter umlaufende, insbesondere rotierende Transportmittel verwendet, an denen üblicherweise jeweils eine Haltevorrichtung zum Halten je eines Behälters vorgesehen ist. Die Behälter, insbesondere Kunststoffflaschen, werden dabei üblicherweise bodenfrei an einem Tragring hängend transportiert. Der im Halsbereich der Behälter ausgebildete Tragring ist somit eine Voraussetzung für die effiziente Handhabung in bekannten Füllanlagen. Der Tragring bildet jedoch nicht nur eine Einschränkung bei der Gestaltung von Behältern und Verschlüssen, sondern bedingt einen vergleichsweise hohen Materialeinsatz bei der Herstellung der Behälter.

Es besteht somit der Bedarf für alternative effiziente Transportsysteme in Abfüllanlagen, bei denen auf einen Tragring an Behältern verzichtet werden kann. Außerdem wäre es wünschenswert, Transportsysteme in Abfüllanlagen in verstärktem Maße modular aufzubauen, um die Flexibilität hinsichtlich unterschiedlicher Behältervarianten und hinsichtlich der unterschiedlichen Anforderungen in einzelnen Anlageteilen zu verbessern.

Ein alternatives Transportkonzept lässt sich beispielsweise von Blasmaschinen ableiten, bei denen die Behälter unmittelbar nach dem Blasen von den Formhälften gehalten und transportiert werden. Hierbei ist es aus der EP 1226017 B1 bekannt, jeweils zwei bezüglich der Transportrichtung des Blasrads entgegengesetzt angeordnete Blasformhälften auf einem gemeinsamen Formträger anzuordnen. Durch Verschwenken der Blasformträger auf dem Blasrad lässt sich eine näherungsweise ortsfeste Lücke zwischen benachbarten Formträgern bereitstellen, um Vorformlinge zwischen die Blasformhälften einzubringen und die fertig geblasenen Flaschen aus diesen zu entnehmen. Hierfür werden jedoch vergleichsweise komplizierte Haltemechanismen der Formträger auf dem Blasrad benötigt, wie beispielsweise radial ausfahrbare Haltearme. Somit bietet sich ein derartiges Transportsystem bisher für den Gebrauch in anderen Anlagenbereichen von Abfüllanlagen nicht an.

Bekannt sind ferner oszillierende Shuttlesysteme mit mehreren Blasformen zum abwechselnden Blasen von Behältern in den jeweiligen Formen, wie beispielsweise in der DE 60208936 T3 beschrieben ist. Ein Öffnen und Schließen der Blasformen wird durch ein Verschieben entlang eines Schienensystems ermöglicht. Derartige Systeme sind jedoch bisher auf stationäre, also nicht rotierende Behandlungsanlagen beschränkt.

Es besteht jedoch der Bedarf, alternative Transportsysteme auch für umlaufende, insbesondere rotierende Behandlungsanlagen bereitzustellen, um die eingangs geschilderten technischen Probleme zu beseitigen oder zumindest abzumildern.

Die gestellte Aufgabe wird mit einem Transportmittel nach Anspruch 1 gelöst. Demnach umfasst dieses unabhängig voneinander angetriebene Fahrzeuge, insbesondere Schlitten, eine Führungseinrichtung zur umlaufenden Führung der Fahrzeuge sowie Formschalen zum Umschließen der Behälter in einem zumindest im Wesentlichen umfänglichen Teilbereich ihrer Seitenwand. Hierbei sind die Formschalen an den Fahrzeugen gelagert, um die Behälter zwischen den Formschalen benachbarter Fahrzeugen aufzunehmen und zu transportieren. Dadurch, dass die Behälter von den Formschalen umschlossen werden, sind Haltevorrichtungen im Halsbereich der Behälter entbehrlich oder können vereinfacht werden. Entsprechend kann der Halsbereich der Behälter beim Transport entlastet werden, so dass Tragringe im Halsbereich entbehrlich werden oder mit geringerem Materialeinsatz hergestellt werden können. Hierbei ermöglicht der voneinander unabhängige Antrieb der Fahrzeuge Bewegungsmuster zum Öffnen, Schließen der Haltevorrichtungen und zum Transportieren der zumindest im Wesentlichen umschlossenen Behälter.

Unter dem Begriff Fahrzeuge sind Transportmittel, wie beispielsweise Schlitten oder Wägen, zu verstehen, die für sich genommen eine Transportfunktion haben, so dass sie zumindest in Abschnitten des Transportmittels von benachbarten Fahrzeugen getrennt werden können. Die Führungseinrichtung umfasst beispielsweise Schienen, Geländer, Leitbleche, Weichen und dergleichen. Die Formschalen können die Behälter insbesondere in deren Bodenbereich von unten abstützen. Das Umschließen der Behälter umfasst vorzugsweise ein formschlüssiges Eingreifen an der Außenwand der Behälter.

Vorzugsweise ist die Führungseinrichtung länger als die aneinander gereihten Fahrzeuge, um wenigstens eine nicht umlaufende, insbesondere näherungsweise ortsfeste, Lücke zwischen den umlaufenden Fahrzeugen zum Einbringen und/oder Entnehmen der Behälter auszubilden. Dadurch können die Behälter in einer seitlichen Richtung, insbesondere in einer radialen Richtung, aus dem Transportmittel entnommen werden und/oder in dieses eingebracht werden. Unter ortsfest ist hierbei zu verstehen, dass die aneinander gereihten Fahrzeuge innerhalb eines vorgegebenen Abschnitts des Transportmittels nacheinander in Transportrichtung zunächst getrennt und dann wieder zusammengefahren werden.

Eine besonders günstige Ausführungsform umfasst fernern ein an der Führungseinrichtung vorgesehenes aktives Antriebsmittel für die Fahrzeuge, insbesondere umfassend Linearmotormodule. Dadurch können die Fahrzeuge im Wesentlichen als reaktive, insbesondere passive Antriebskomponenten ausgebildet werden. Dies vereinfacht die Konstruktion und ermöglicht eine modulare Bauweise der Fahrzeuge, insbesondere ein einfaches Austauschen der Vielzahl der Fahrzeuge. Linearmotormodule eignen sich besonders für einen abschnittsweise individuell regelbaren Antrieb der Fahrzeuge. Hierbei werden die Fahrzeuge vorzugsweise von einem Linearmotormodul an das in Transportrichtung nachfolgende Linearmotormodul übergeben.

Vorzugsweise umfassen die Fahrzeuge mit dem aktiven Antriebsmittel zusammenwirkende reaktive Antriebsmittel, insbesondere Permanentmagnete. Dadurch kann die Steuerung der Fahrzeuge vereinfacht werden. Unter reaktiv ist hier eine zentrale Steuerung der Transportbewegung mit Hilfe des aktiven Antriebsmittels zu verstehen. Beispielsweise mit Permanentmagneten lassen sich die Fahrzeuge als passive Antriebskomponenten ausbilden.

Bei einer besonders günstigen Ausführungsform sind jeweils zwei bezüglich der Transportrichtung der Behälter entgegen gesetzte Formschalen auf einem Fahrzeug gelagert. Dadurch lässt sich ein Strom aus umschlossenen Behältern zwischen aneinander gefahrenen Formschalen transportieren. Benachbarte Formschalen bilden somit eine Haltevorrichtung für die Behälter, die sich auf einfache Weise durch Auseinanderfahren der Fahrzeuge öffnen lässt und durch Zusammenfahren der Fahrzeuge schließen lässt. Beim Öffnen und Schließen lassen sich somit besonders einfache Bewegungsmuster realisieren.

Vorzugsweise können die Fahrzeuge aneinander gefahren werden, um einen dazwischen liegenden Behälter mit zwei Formschalen umfänglich vollständig zu umschließen. Dadurch lässt sich der Behälter derart führen, dass ein Tragring am Behälter und eine entsprechende Haltevorrichtung an dem Transportmittel entbehrlich werden.

Vorzugsweise sind an den Formschalen Arretierungsmittel vorgesehen, um die umschlossenen Behälter gegen ein Verdrehen um ihre Hauptachse zu sichern. Dadurch lässt sich der Behälter beim Verschließen, insbesondere beim Schraubverschließen, in einer vorgegebenen Drehlage halten. Das Arretierungsmittel kann beispielsweise eine Erhebung oder Vertiefung sein, die in eine entsprechende Vertiefung oder Erhebung des Behälters eingreift. Das Arretierungsmittel ist somit vorzugsweise formschlüssig, könnte jedoch auch kraftschlüssig sein.

Bei einer weiteren bevorzugten Ausführungsform sind die Formschalen ausgebildet, die umschlossenen Behälter gegen einen Fülldruck zum Karbonisieren von außen abzustützen. Dadurch kann das Transportmittel in eine Fülleinrichtung für karbonisierte Getränke integriert werden. Insbesondere können die Behälter während des Transports in den Formschalen befüllt und karbonisiert werden. Hierbei kann der Behälter dadurch abgestützt werden, dass die Formschalen Wandbereiche aufweisen, die als Negativ der Behälterform ausgebildet sind. Durch eine ausreichende Anzahl derartiger Kontaktbereiche zwischen der Behälterwand und der Formschale lässt sich eine unzulässige Verformung des Behälters während des Karbonisierens vermeiden.

Bei einer weiteren bevorzugten Ausführungsform sind die Formschalen als Blasformhälften ausgebildet. Dadurch lässt sich das Transportmittel in eine Vorrichtung zum Blasen und/oder Streckblasen der Behälter integrieren. Beispielsweise könnten die Formschalen die Behälter seitlich umgreifen und zum Blasen der Behälter durch eine Bodenform ergänzt werden. In diesem Fall ist vorzugsweise ein Verriegelungsmittel vorgesehen, beispielsweise mit Klammern oder dergleichen, um die Formschalen gegen den Blasdruck abzudichten.

Vorzugsweise sind die Formschalen ausgebildet, die umschlossenen Behälter unterhalb eines Halsbereichs der Behälter seitlich zu halten. Dadurch wird ein Tragring an den Behältern entbehrlich. Die Behälter können im Mündungsbereich somit mit verringertem Materialeinsatz hergestellt werden. Ferner können Behälter mit unterschiedlich geformten Halsbereichen, Mündungen und Verschlüssen transportiert werden.

Die gestellte Aufgabe wird ferner gelöst mit einem Verfahren nach Anspruch 11, zum Transport der Behälter mit dem erfindungsgemäßen Transportmittel. Demnach umfasst das Verfahren die Schritte: Umschließen der Behälter in einem umfänglichen Teilbereich ihrer Seitenwand mit dem Formschalen; Transportieren der Behälter zwischen Formschalen jeweils benachbarter Fahrzeuge; und Auseinanderfahren der benachbarten Fahrzeuge, um die Behälter aus dem Transportmittel zu entnehmen, wobei die Behälter insbesondere während des Transports geblasen und/oder befüllt und/oder verschlossen werden.

Vorzugsweise wird die Umlaufgeschwindigkeit der Fahrzeuge zum Beladen und/oder Entnehmen der Behälter gegenüber jeweils vorlaufenden und nachlaufenden Fahrzeugen variiert, um eine nicht umlaufende Lücke zwischen den Fahrzeugen auszubilden. Dadurch lässt sich die Lücke zwischen einem ersten Paar Fahrzeugen schließen und gleichzeitig zwischen einem benachbarten Paar Fahrzeugen öffnen.

Vorzugsweise werden die Behälter während des Transports geblasen und/oder befüllt und/oder verschlossen. Somit lässt sich ein flexibles Transportverfahren für Behälter bereitstellen, das in unterschiedliche Produktionsschritte in Abfüllanlagen integriert werden kann.

Die gestellte Aufgabe wird ferner gelöst mit einem Behälter nach Anspruch 13, insbesondere mit einem Behälter aus Kunststoff, der für den Transport mit dem erfindungsgemäßen Transportmittel geeignet ist. Hierbei ist wenigstens ein umfänglicher Teilbereich der Behälteraußenwand als Negativ eines Innenwandbereichs der Formschalen ausgebildet. Dadurch können die Behälter in einem umfänglichen Seitenwandbereich gehalten werden, so dass ein Tragring im Halsbereich oder Mündungsbereich der Behälter entbehrlich wird. Dadurch lässt sich Material bei der Herstellung der Behälter einsparen.

Bei einer besonders günstigen Ausführungsform des Behälters ist die Behälterwand im gesamten Bereich der Mündungsöffnung, gemessen in einer Richtung senkrecht zur Hauptachse des Behälters, nicht dicker als 2 mm, insbesondere nicht dicker als 1 mm. Dadurch kann der Behälter mit besonders geringem Materialeinsatz hergestellt werden. Außerdem kann der Mündungsbereich für unterschiedliche Verschlusstypen ausgelegt werden.

Vorzugsweise umfasst der erfindungsgemäße Behälter ferner einen in die Mündungsöffnung eingeschweißten Verschluss, der vorzugsweise aus dem gleichen Material wie der Behälter besteht, wobei an dem Verschluss insbesondere eine Abreißlasche oder dergleichen zum Öffnen des Behälters vorgesehen ist. Dadurch lassen sich Verschlüsse mit reduziertem Materialeinsatz und/oder mit verbesserter Handhabung und/oder mit verbesserter Materialrückgewinnung herstellen. Es ergeben sich zudem zusätzliche Möglichkeiten bei der Dimensionierung und Gestaltung von Verschlüssen.

Bevorzugte Ausführungsformen der Erfindung sind in der Zeichnung dargestellt. Es zeigen:
- Fig. 1: eine erste Ausführungsform des erfindungsgemäßen Transportmittels in der schematischen Draufsicht;
- Fig. 2: einen schematischen Querschnitt durch einen in dem erfindungsgemäßen Transportmittel gehaltenen Behälter;
- Fig. 3: eine schematische Draufsicht auf eine Abfüllanlage mit dem erfindungsgemäßen Transportmittel der ersten Ausführungsform;
- Fig. 4A: einen schematischen Längsschnitt durch einen erfindungsgemäßen Behälter mit eingeschweißtem Verschluss;
- Fig. 4B: eine Schrägansicht des Mündungsbereichs des Behälters aus Fig. 4A; und
- Fig. 5: ein erläuterndes Vergleichsbeispiel für ein Transportmittel, bei dem zwei getrennte Transportkreisläufe für Formhälften vorgesehen sind.

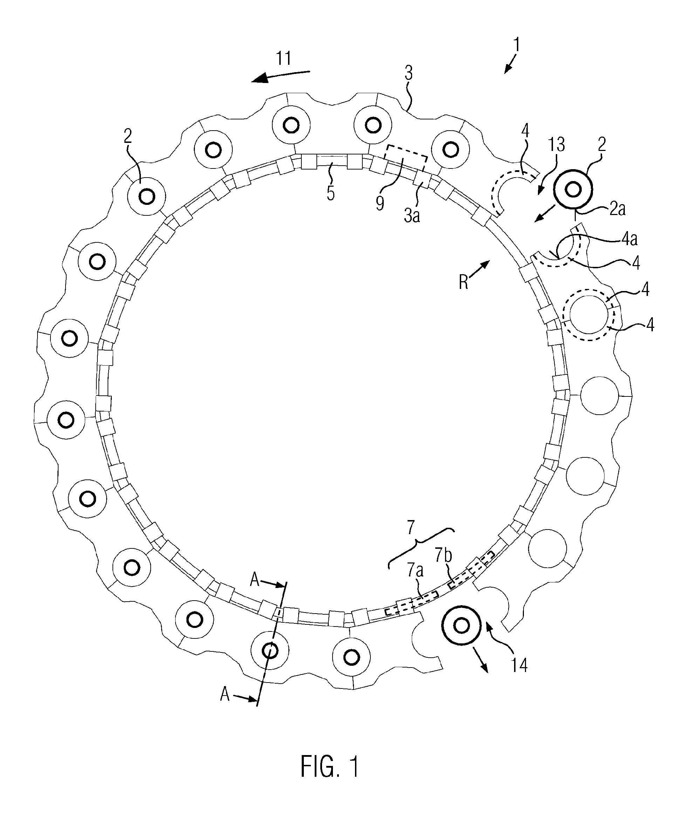

Wie die Fig. 1 erkennen lässt, umfasst eine erste Ausführungsform 1 des erfindungsgemäßen Transportmittels für Behälter 2, wie beispielsweise Kunststoffflaschen, eine Vielzahl von einzeln angetriebenen Fahrzeugen 3 mit Formschalen 4 zur Aufnahme der Behälter 2. Die Fahrzeuge 3 laufen auf geeigneten Lagern 3a, Fahrwerken oder dergleichen entlang einer Führungseinrichtung 5, wie beispielsweise einer Schiene, um. In die Führungseinrichtung 5 ist ein aktives Antriebsmittel 7 integriert, das beispielsweise aneinander gereihte Linearmotormodule umfasst. Diese wirken mit reaktiven, insbesondere passiven Antriebsmitteln 9 zusammen, die an den Fahrzeugen 3 vorgesehen sind. Das aktive Antriebsmittel 7 erstreckt sich vollumfänglich entlang der Führungseinrichtung 5. Zu diesem Zweck sind beispielsweise eine Vielzahl von Linearmotormodulen in geeignetem Abstand zueinander entlang der Transportrichtung 11 an dem Transportmittel 1 vorgesehen.

In der Fig. 1 sind vereinfachend lediglich zwei umfängliche Segmente 7a, 7b, beispielsweise in Form benachbarter Linearmotormodule, des Antriebsmittels 7 dargestellt. Ebenso ist das reaktive Antriebsmittel 9 lediglich an einem der dargestellten Fahrzeuge 3 angedeutet. Das aktive Antriebsmittel 7 und das reaktive Antriebsmittel 9 wirken derart zusammen, dass ein kontinuierlicher Transport der Fahrzeuge 3 entlang der Transportrichtung 11 ermöglicht wird. Entsprechend ist bei einer segmentierten Bauweise des aktiven Antriebsmittels 7, beispielsweise in Form einzelner Linearmotormodule, gewährleistet, dass die reaktiven Antriebsmittel 9 von einem Segment 7a an das nächste Segment 7b übergeben werden.

Wie die Fig. 1 ferner erkennen lässt, ist die Führungseinrichtung 5 entlang der Transportrichtung 11 länger als die aneinandergereihten Fahrzeuge 3, um wenigstens eine Lücke 13, 14 zwischen benachbarten Fahrzeugen 3 auszubilden, an der die Behälter 2 in das Transportmittel 1 eingebracht und/oder aus diesem entnommen werden können. Im Beispiel der Fig. 1 ist eine erste, bezüglich der Transportrichtung 11 im Wesentlichen ortsfeste Lücke 13 zum Einbringen der Behälter 2 vorgesehen, sowie eine zweite, bezüglich der Transportrichtung 11 im Wesentlichen ortfeste Lücke 14 zur Entnahme der Behälter 2. Die Lücken 13, 14 werden dadurch bereitgestellt, dass die Geschwindigkeit wenigstens eines Fahrzeugs 3 im Bereich der Lücke 13, 14 gegenüber voraus laufenden Fahrzeugen 3 und/oder nachfolgenden Fahrzeugen 3 geändert wird. Beispielsweise könnte ein erstes Fahrzeug 3 im Bereich der Lücke 13, 14 gegenüber einem zweiten, nachfolgenden Fahrzeug 3 beschleunigt werden, um die Lücke 13, 14 zu öffnen. Zum Schließen der Lücke 13, 14 nach dem Einbringen oder Entnehmen des Behälters 2 wird das zweite Fahrzeug 3 gegenüber dem vorlaufenden ersten Fahrzeug 3 beschleunigt und an dieses angedockt, so dass der Behälter 2 zwischen benachbarten Formhälften 4 gehalten wird. Hierbei umschließen die Formhälften 4 den Behälter 2 vorzugsweise vollumfänglich. Es ist aber je nach Anwendung auch denkbar, dass die Formhälften 4 nur einen umfänglichen Teilbereich der Behälterseitenwand 2a umschließen. Neben einer seitlichen Führung der Behälter ist, wie nachfolgend noch ausführlicher erläutert wird, ein zusätzliches Halten des Behälters 2 in vertikaler Richtung vorteilhaft.

Um ein Öffnen und Schließen des Transportmittels 1 im Bereich der Lücken 13, 14 zu ermöglichen, sind die Fahrzeuge 3 einzeln und unabhängig voneinander angetrieben. Dies bedeutet im Sinne der Erfindung, dass die Relativposition benachbarter Fahrzeuge 3 in Transportrichtung 11 bei laufendem Transport variabel ist. Hierbei ist es vorteilhaft, jedoch nicht zwingend erforderlich, dass die Fahrzeuge 3 einzeln austauschbar sind. Ebenso können die Formschalen 4 an den Fahrzeugen 3 wechselbar gelagert sein. Es wäre somit möglich, die Formschalen 4 als wechselbare Garniturenteile auszubilden, so dass bei einer Produktionsumstellung auf einen anderen Behältertyp, beispielsweise lediglich die Formschalen gewechselt werden müssten. Es wäre aber auch denkbar die Fahrzeuge 3 schnell wechselbar auszuführen, um diese bei einem Produktwechsel und/oder einer Betriebsstörung wechseln zu können.

Wie die Fig. 1 ferner verdeutlicht, sind vorzugsweise jeweils zwei von einander wegweisende Formhälften 4 an den Fahrzeugen 3 vorgesehen. Dadurch lässt sich das Transportmittel 1 im Bereich der Lücken 13, 14 durch einfaches Verschieben jeweils eines einzelnen Fahrzeugs 3 gegenüber der benachbarten Fahrzeuge 3 gleichzeitig öffnen und schließen. Es wäre aber auch denkbar, für jede Formhälfte 4 ein eigenes Fahrzeug 3 vorzusehen. In diesem Fall könnte das Öffnen und Schließen des Transportmittels 1 im Bereich der Lücken 13, 14 zeitlich entkoppelt werden.

Bei der ersten Ausführungsform 1 ist die Führungseinrichtung 5 bezüglich der Krümmung der Transportbahn radial innen liegend angeordnet. Dies vereinfacht das Einbringen und Entnehmen der Behälter in einer seitlichen, insbesondere radialen Richtung R nach außen. Je nach Anwendung wäre es aber auch denkbar, die Führungseinrichtung 5 in einem Bereich unterhalb oder oberhalb der Formhälften 4 anzuordnen.

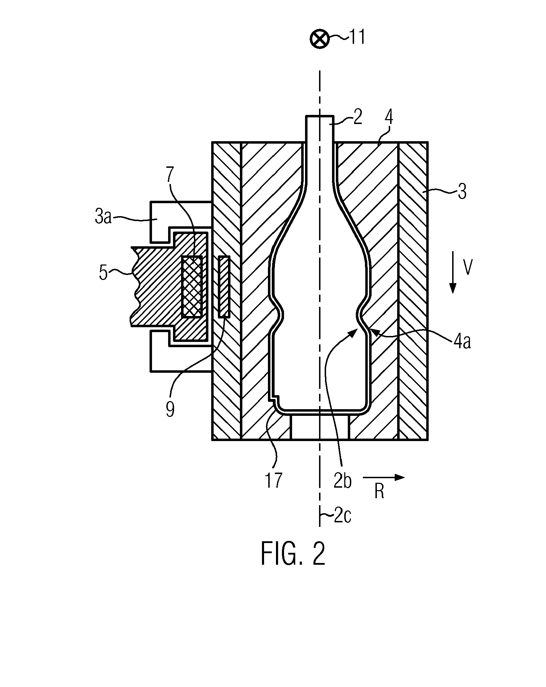

Wie die Fig. 2 im Querschnitt entlang der Linie A-A der Fig. 1 verdeutlicht, können die Formhälften 4 einen inneren Haltebereich 4a umfassen, der im Wesentlichen als Negativ der Behälterkontur 2b ausgebildet ist. Dadurch lässt sich der von den Formhälften 4 umschlossene Behälter 2 in vertikaler Richtung V arretieren. Somit ist ein Tragring an dem Behälter 2 und eine entsprechende Haltevorrichtung an dem Transportmittel 1 entbehrlich.

Vorzugsweise sind der innere Haltebereich 4a der Formschalen 4 und die äußere Kontur 2b der zu haltenden Behälter 2 derart aufeinander abgestimmt, dass der Behälter 2 gegen einen Fülldruck beim Karbonisieren eines abzufüllenden Getränks in dem Behälter 2 abgestützt wird. Das heißt, zwischen der äußeren Kontur 2b des Behälters 2 und dem inneren Haltebereich 4a der Formschalen 4 wird eine Maßtoleranz eingehalten, die ein unzulässiges Aufdehnen des Behälters 2 beim Karbonisieren vermeidet.

Alternativ oder zusätzlich kann an den Formschalen 4 ein Arretierungsmittel 17 vorgesehen sein, beispielsweise in Form eines Vorsprungs im Bodenbereich einer der korrespondierenden Formschalen 4, der in eine entsprechende Vertiefung in dem Behälter 2 eingreift, um ein Verdrehen des Behälters 2 um seine Hauptachse 2c gegenüber der Formschale 4 zu verhindern. Dadurch kann der Behälter 2 in einer vorgegebenen Drehlage transportiert und behandelt werden. Dies ermöglicht ein Verschließen des Behälters 2 während des Transports, insbesondere durch Aufschrauben einer (nicht dargestellten) Verschlusskappe.

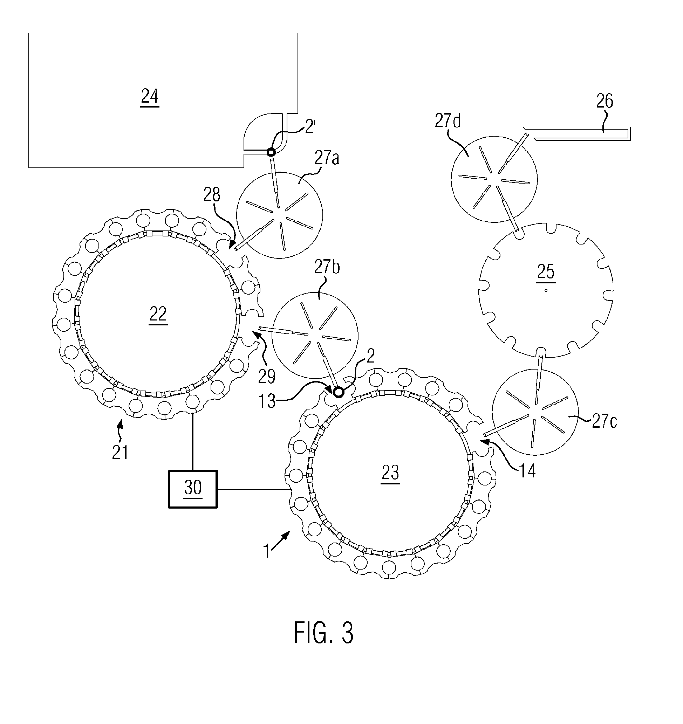

Die Fig. 3 verdeutlicht, dass das erfindungsgemäße Transportmittel für den Behältertransport in unterschiedlichen Behandlungsstationen einer Abfüllanlage verwendet werden kann. Demnach ist das erfindungsgemäße Transportmittel gemäß einer zweiten Ausführungsform 21 an einer Blasstation 22 vorgesehen sowie gemäß der ersten Ausführungsform 1 an einer Füllstation 23. Angedeutet sind ferner ein Heizmodul 24 für Vorformlinge 2', eine Verschließstation 25, eine Abfördereinrichtung 26 sowie Übergabeeinrichtungen 27a - 27d zur Übergabe der Vorformlinge 2' aus dem Heizmodul 24 an die Blasstation 22 und zur Übergabe von Behältern 2 zwischen den übrigen Stationen.

Wie die Fig. 3 erkennen lässt, können die erfindungsgemäßen Transportmittel 1, 21 im Wesentlichen nach dem gleichen Funktionsprinzip arbeiten. Beispielsweise ist an der Blasstation 22 und der Füllstation 23 jeweils eine nicht umlaufende Lücke 28, 13 zum Einbringen von Vorformlingen 2' oder Behältern 2 vorgesehen sowie eine nicht umlaufende Lücke 29, 14 zur Entnahme der jeweiligen Behälter 2. Diese näherungsweise ortsfesten Lücken 13, 14, 28, 29 können jedoch in unterschiedlichen umfänglichen Teilbereichen der jeweiligen Transportmittel 1, 21 vorgesehen sein, um beispielsweise bei der Blasstation 22 einen möglichst großen Maschinenwinkel für das Blasen der Behälter 2 auszunutzen. Es wäre selbstverständlich auch denkbar, ein erfindungsgemäßes Transportmittel an der Verschließstation 25 vorzusehen.

Vorteilhaft können die Übergabeeinrichtungen 27a - 27d alternativ ersetzt werden durch einen durchgehenden Transport mit dem erfindungsgemäßen Transportmitteln 1, 21. Insbesondere bietet das den Vorteil, dass die Behälter 2 durchgehend gehalten werden und sämtliche Übergabeproblematik ausgeschlossen ist. Dazu ist es notwendig, die Führungseinrichtung 5 mit dem aktiven Antriebsmittel 7 durchgehend auszuführen, also von der Blasstation 22 über die Füllstation 23 bis zur Verschließstation 25, soweit diese in der Anordnung vorhanden sind.

Wie die Fig. 3 ferner andeutet, ist eine Steuereinheit 30 vorgesehen, um wenigstens ein erfindungsgemäßes Transportmittel 1, 21 anzusteuern. Die Steuereinheit 30 dient dazu, die umlaufenden Bewegungen der einzelnen Fahrzeuge 3 so zu koordinieren, dass in vorgegebenen umfänglichen Teilbereichen oder Maschinenwinkelbereichen näherungsweise ortsfeste Lücken 13, 14, 28, 29 zum Einbringen und Entnehmen von Vorformlingen 2' oder Behältern 2 bereitgestellt werden, und dass zwischen den Lücken 13, 14 und 28, 29 Transportstrecken bereitgestellt werden, in denen die Behälter 2 von den Formschalen 4 umschlossen werden und somit von den Fahrzeugen 3 umlaufend transportiert werden. Während des umlaufenden Transports der Behälter 2 können Behandlungsschritte, wie beispielsweise das Blasen der Behälter 2, das Befüllen der Behälter 2 und/oder das Verschließen der Behälter 2 durchgeführt werden. An den Lücken 13, 14, 28, 29 können die Behälter 2 und/oder die Vorformlinge 2' durch bekannte Übergabevorrichtungen 27a - 27d, wie beispielsweise Transfersternräder, übergeben werden. Somit lässt sich das erfindungsgemäße Transportmittel 1, 21 in unterschiedliche Produktionsanlagen zur Getränkeabfüllung integrieren.

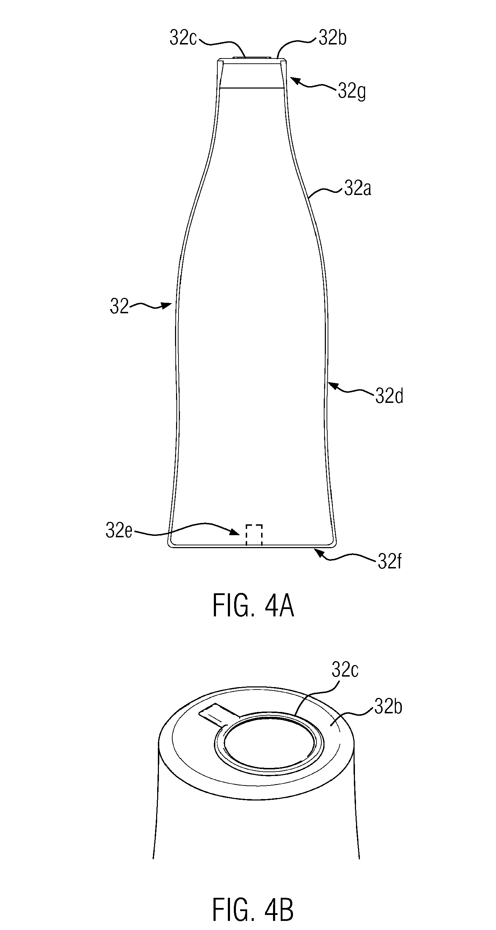

Die Fig. 4A und 4B zeigen eine bevorzugte Ausführungsform 32 eines erfindungsgemäßen Behälters, umfassend einen Behältergrundkörper 32a aus Kunststoff, beispielsweise aus PET, und einen mit dem Behältergrundkörper 32a verschweißten Verschluss 32b. An dem Verschluss 32b ist vorzugsweise eine Abreißlasche 32c vorgesehen, mit der der Verschluss 32b oder zumindest ein Abschnitt des Verschlusses 32b abgezogen werden kann, um den Behälter 32 zu öffnen. Wie die Fig. 4a ferner erkennen lässt, ist an dem Behälter 32 kein Tragring vorgesehen. Ebenso ist der ansonsten bei Kunststoffflaschen übliche Schraubverschluss entbehrlich. Vorzugsweise entspricht die Außenkontur 32d des Behälters 32 zumindest abschnittsweise der Kontur des inneren Haltebereichs 4a der Formhälften 4. Ebenso kann ein Arretierungsmittel 32e im Bereich der Außenkontur 32d oder im Bereich des Behälterbodens 32f vorgesehen sein, vorzugsweise als Ausnehmung oder Einbuchtung in dem Behälter 32, um die Drehlage des Behälters 32 vorzugeben. Dies kann beispielsweise bei einer Etikettierung des Behälters 32 vorteilhaft sein.

Somit ermöglicht der erfindungsgemäße Behälter 32 im Zusammenwirken mit den Formschalen 4 eine Führung und ein Halten der Behälter 32 im Bereich der Außenkontur 32d und ein Arretieren der Drehlage des Behälters 32 bezüglich der Formschalen 4 mit Hilfe der Arretierungsmittel 32e, 17. Somit müssen im Mündungsbereich 32g des Behälters 32 keinerlei Strukturen zum Tragen und/oder Arretieren des Behälters 32 vorgesehen werden. Daraus folgt eine verbesserte Gestaltungsfreiheit im Mündungsbereich 32g des Behälters 32. Möglich ist insbesondere eine Materialersparnis im Mündungsbereich 32g und im Halsbereich des Behälters 32 sowie ein Vereinfachen des Behälterverschlusses. Beispielsweise lässt sich der eingeschweißte Verschluss 32b auf einfache Weise und mit geringem Materialeinsatz herstellen. Insbesondere kann der Mündungsbereich 32g des Behälters 32 besonders dünnwandig hergestellt werden. Die Wandstärke ist dort vorzugsweise kleiner als 2 mm, insbesondere kleiner als 1 mm.

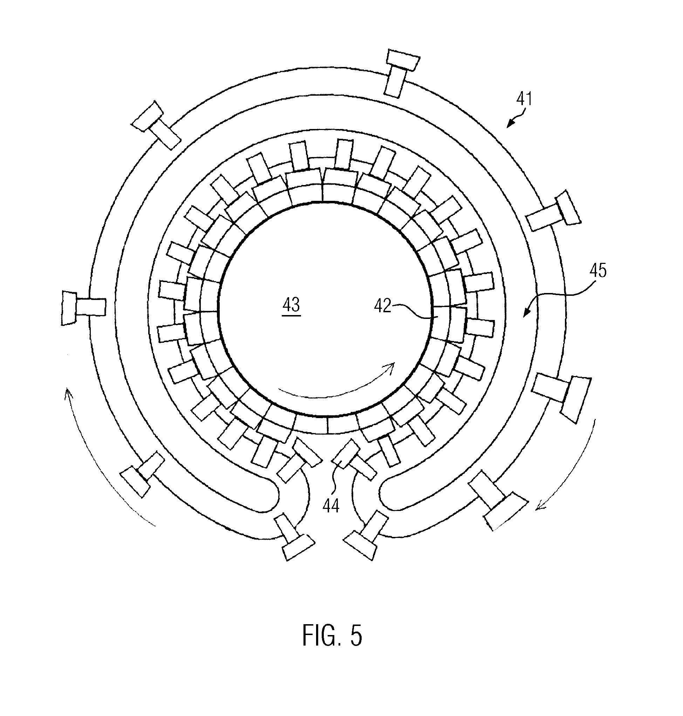

Zum besseren Verständnis der Erfindung ist in der Fig. 5 ein Vergleichsbeispiel dargestellt mit einem Transportmittel 41, bei dem radial innen liegende Blasformhälften 42 fest an einem Blasrad 43 montiert sind, während sich radial außen liegende Blasformhälften 44 in einem eigenen Transportkreislauf entlang eines umfänglichen Teilabschnitts des Blasrads 43 mit den radial innen liegenden Blasformhälften 42 mitbewegen und dabei jeweils mit einer korrespondierenden inneren Blasformhälfte 42 eine Blasform schließen. Der Kreislauf für die radial außen liegenden Blasformhälften kann hierbei durch ein Transportsystem 45, umfassend eine Führungseinrichtung mit einem aktiven Antriebsmittel und passiv betriebenen Fahrzeugen zum Lagern der äußeren Blasformhälften 44 realisiert werden. Beispielsweise könnten in das Führungsmittel Linearmotormodule integriert werden, in die Fahrzeuge für die äußeren Blasformhälften 44 Permanentmagnete. Es wäre aber auch denkbar die radial außen liegenden Blasformhälften 44 mit einer umlaufenden Kette oder dergleichen anzutreiben. Die äußeren Blasformhälften 44 könnten formschlüssig in die innen liegenden Blasformhälften 42 eingeklinkt werden, so dass eine zusätzliche Verriegelungseinrichtung (nicht gezeigt) entbehrlich wird. Bodenformen könnten, wie aus dem Stand der Technik bekannt, von unten an die Blasformhälften 42, 44 angedockt werden. Die Bodenform könnte durch einen zusätzlichen Verriegelungsmechanismus, beispielsweise einen Schieber, mit den Blasformhälften verriegelt werden. Dieses Vergleichsbeispiel verdeutlicht ein Konzept, bei dem ein besonders kompaktes Blasrad mit einem besonders großen, für das Blasen der Behälter nutzbaren Maschinenwinkel, bereitgestellt wird.

Die Arbeitsweise des erfindungsgemäßen Transportmittels wird beispielhaft anhand der ersten Ausführungsform 1 beim Einsatz in der in der Fig. 3 angedeuteten Füllstation 23 beschrieben. Demnach werden zu füllende Behälter 2 kontinuierlich von der Übergabeeinrichtung 27b im Bereich der Lücke 13 zwischen benachbarten Formhälften 4 zugeführt. Zu diesem Zweck wird beispielsweise ein Fahrzeug 3 im Bereich der Lücke 13 mit einer erhöhten Umlaufgeschwindigkeit an das jeweils voraus laufende Fahrzeug 3 angedockt, um die Lücke 13 zu öffnen. Nach dem Öffnen der Lücke 13 kann ein Behälter 2 von der Übergabeeinrichtung 27b in die Lücke 13 eingebracht werden. Hierbei ist es auch möglich, dass die voraus laufende Formschale 4 mit dem Fahrzeug 3 vorübergehend mit einer verminderten Transportgeschwindigkeit weiterfährt oder bezüglich der Lücke 13 vorübergehend ortsfest ist. Vorzugsweise sind jedoch an der Übergabeeinrichtung 27b entsprechende Schwenkeinrichtungen und/oder Teleskopiereinrichtungen vorgesehen, um den Behälter 2 mit der vorlaufenden Formschale 4 in Kontakt zu bringen. Nach korrekter Positionierung des Behälters 2 bezüglich der vorlaufenden Formschale 4 kann das Fahrzeug 3 mit der nachlaufenden Formschale 4 an den Behälter 2 gefahren werden. Zu diesem Zweck wird die Umlaufgeschwindigkeit der nachlaufenden Formschale 4 und des zugeordneten Fahrzeugs 3 zeitweise erhöht. Dadurch öffnet sich automatisch die Lücke 13 zu dem darauf folgenden Fahrzeug 3, in die wiederum ein Behälter 2 eingebracht werden kann. Die näherungsweise ortsfeste Lücke 13 kann somit in einem festgelegten Maschinenwinkelbereich bezüglich der Transportrichtung 11 hin und her wandern. Der Begriff ortsfest ist daher im Sinne von nicht umlaufend zu verstehen und definiert einen Bereich, insbesondere einen Maschinenwinkelbereich, den die Lücke 13 nicht verlässt, um die Bewegungsabläufe zum Öffnen des Transportmittels 1, zum Aufnehmen des Behälters 2 zwischen die Formschalen 4 und zum Schließen des Transportmittels 1 durchzuführen.

Nach dem Schließen der Lücke 13 wird der jeweilige Behälter 2 zwischen den Formschalen 4 umfänglich weitertransportiert, so dass der jeweilige Produktionsschritt, wie beispielsweise das Befüllen der Flasche, während des Transports des Behälters 2 durchgeführt werden kann. Im Bereich der Lücke 14 wird diese dem zuvor für die Lücke 13 beschriebenen Bewegungsschema folgend geöffnet, um den Behälter 2 zu entnehmen und an die Übergabevorrichtung 27c zur Weiterverarbeitung zu übergeben.

Die Lücken 14, 28 und 29 lassen sich auf die gleiche Weise bereit stellen, wie die ausführlich beschriebene Lücke 13. Es ist jedoch möglich, die beschriebenen Bewegungsabläufe der Fahrzeuge 3 und der Formschalen 4 durch zusätzliche Öffnungs- und/oder Schließbewegungen zu ergänzen, beispielsweise durch Heben und Senken einer Bodenform im Bereich der Blasstation 22.

Um insbesondere den erhöhten Kräften, hervorgerufen durch hohe Drücke beim Blasvorgang oder beim Befüllen mit karbonisierten Flüssigkeiten, entgegenzuwirken, können die Fahrzeuge 3 miteinander verbunden werden. Entweder erfolgt dies an den Formschalen 4 oder den reaktiven Antriebsmittel 9, bzw. deren Halterung. Dies kann durch geeignete Arretierungsmechanismen nach dem Einbringen der Behälter 2 erfolgen. Dabei kann es sich um eine einfache Verklinkung, eine Magnetkopplung, eine Vakuumkopplung oder eine sonstige kraft- oder formschlüssige Verbindung handeln, welche kurz vor dem Öffnen der Formschalen 4 wieder aufgehoben wird. Insbesondere werden dadurch die Linearmotormodule keinen abschnittsweise auftretenden, weiteren Kräften ausgesetzt.

Die beschriebenen Ausführungsformen lassen sich somit beliebig in technisch sinnvoller Weise ergänzen, um weitere vorteilhafte Weiterbildungen der Erfindung zu realisieren.

## Patentansprüche

1. Transportmittel (1, 21) für Behälter (2, 32), insbesondere Kunststoffflaschen, mit:
- unabhängig voneinander angetriebenen Fahrzeugen (3), insbesondere Schlitten;- einer Führungseinrichtung (5) zur umlaufenden Führung der Fahrzeuge,
- Formschalen (4) zum Umschließen der Behälter in einem umfänglichen Teilbereich ihrer Seitenwand (2a),
wobei die Formschalen an den Fahrzeugen gelagert sind, um die Behälter zwischen den Formschalen benachbarter Fahrzeugen aufzunehmen und zu transportieren.

2. Transportmittel nach Anspruch 1, wobei die Führungseinrichtung (5) länger ist als die aneinander gereihten Fahrzeuge (3), um wenigstens eine nicht umlaufende Lücke (13, 14, 28, 29) zwischen den umlaufenden Fahrzeugen zum Einbringen und/oder Entnehmen der Behälter (2) auszubilden.

3. Transportmittel nach Anspruch 1 oder 2, ferner mit einem an der Führungseinrichtung (5) vorgesehenen aktiven Antriebsmittel (7) für die Fahrzeuge (3), insbesondere umfassend Linearmotormodule.

4. Transportmittel nach Anspruch 3, wobei die Fahrzeuge (3) mit dem aktiven Antriebsmittel (7) zusammen wirkende reaktive Antriebsmittel (9) umfassen, insbesondere Permanentmagnete.

5. Transportmittel nach wenigstens einem der vorigen Ansprüche, wobei jeweils zwei bezüglich der Transportrichtung (11) der Behälter (2) entgegen gesetzte Formschalen (4) auf einem Fahrzeug (3) gelagert sind.

6. Transportmittel nach wenigstens einem der vorigen Ansprüche, wobei die Fahrzeuge (3) aneinander gefahren werden können, um einen dazwischen liegenden Behälter (2) mit zwei Formschalen (4) umfänglich vollständig zu umschließen.

7. Transportmittel nach wenigstens einem der vorigen Ansprüche, wobei an den Formschalen (4) Arretierungsmittel (17) vorgesehen sind, um die umschlossenen Behälter (2) gegen ein Verdrehen um ihre Hauptachse (2c) zu sichern

8. Transportmittel nach wenigstens einem der vorigen Ansprüche, wobei die Formschalen (4) ausgebildet sind, die umschlossenen Behälter (2) gegen einen Fülldruck zum Karbonisieren von außen abzustützen.

9. Transportmittel nach wenigstens einem der vorigen Ansprüche, wobei die Formschalen (4) als Blasformhälften ausgebildet sind.

10. Transportmittel nach wenigstens einem der vorigen Ansprüche, wobei die Formschalen (4) ausgebildet sind, die umschlossenen Behälter (2) unterhalb eines Halsbereichs der Behälter seitlich zu halten.

11. Verfahren zum Transport von Behältern (2) mit dem Transportmittel (1, 21) nach wenigstens einem der vorigen Ansprüche, mit den Schritten:
a) Umschließen der Behälter in einem umfänglichen Teilbereich ihrer Seitenwand (2a) mit dem Formschalen (4);
b) Transportieren der Behälter zwischen den Formschalen benachbarter Fahrzeuge (3); und
c) Auseinanderfahren der benachbarten Fahrzeuge, um die Behälter aus dem Transportmittel zu entnehmen, wobei die Behälter insbesondere während des Transports geblasen und/oder befüllt und/oder verschlossen werden.

12. Verfahren nach Anspruch 11, wobei die Umlaufgeschwindigkeit der Fahrzeuge (3) zum Beladen und/oder Entnehmen der Behälter (2) gegenüber jeweils vorlaufenden und nachlaufenden Fahrzeugen (3) variiert wird, um eine nicht umlaufende Lücke (13, 14, 28, 29) zwischen den Fahrzeugen (3) auszubilden.

13. Behälter (2, 32), insbesondere aus Kunststoff, geeignet für den Transport mit dem Transportmittel (1, 21) nach wenigstens einem der vorigen Ansprüche, wobei wenigstens ein umfänglicher Teilbereich der Behälteraußenwand (2a) als Negativ eines inneren Aufnahmebereichs (4a) der Formschalen (4) ausgebildet ist.

14. Behälter nach Anspruch 13, wobei die Behälterwand im gesamten Bereich (32g) der Mündungsöffnung, gemessen in einer Richtung senkrecht zur Hauptachse (2c) des Behälters (2), nicht dicker ist als 2 mm, insbesondere nicht dicker als 1 mm.

15. Behälter nach Anspruch 13 oder 14, ferner mit einem in die Mündungsöffnung eingeschweißten Verschluss (32b), wobei an dem Verschluss insbesondere eine Abreißlasche (32c) oder dergleichen zum Öffnen des Behälters vorgesehen ist.
